# EUROPÄISCHE PATENTSCHRIFT

(11) **EP 0 572 452 B1**
(45) Veröffentlichungstag und Bekanntmachung des Hinweises auf die Patenterteilung: **19.04.1995**
(21) Anmeldenummer: 92904473.3
(22) Anmeldetag: 13.02.1992
(51) Int. Cl.: H02M 7/06

(54) **MEHRPHASIG GESPEISTES NETZGERÄT**
POWER UNIT WITH MULTI-PHASE SUPPLY
BLOC D'ALIMENTATION SECTEUR A ALIMENTATION POLYPHASEE

(30) Priorität: 20.02.1991 AT 354/91
(43) Veröffentlichungstag der Anmeldung: 08.12.1993
(73) Patentinhaber: SIEMENS AKTIENGESELLSCHAFT, 80333 München (DE)
(72) Erfinder: KALNY, Friedrich, A-1130 Wien (AT)
(86) Internationale Anmeldenummer: EP9200316
(87) Internationale Veröffentlichungsnummer: WO9215146

(56) Entgegenhaltungen:
- CH-A- 415 820
- DE-A- 2 708 882

## Beschreibung

Die Erfindung betrifft ein mehrphasig gespeistes Netzgerät für Kleinverbraucher, bei dem über Vorschaltimpedanzen, insbesondere Kondensatoren, geführte Phasenstromkreise mittels Dioden an einen gemeinsamen Gleichstrom-Speisepunkt angeschlossen sind.

Mehrphasige, insbesondere dreiphasige Netzgeräte haben die Aufgabe, die Gerätefunktion nicht nur beim Betrieb mit allen drei Phasen, sondern auch im Falle von Spannungsausfällen beim Betrieb mit zwei oder auch nur mit einer Phase sicherzustellen. Nachteilig an den üblichen Schaltungen ist, daß der zur Verfügung gestellte Strom im dreiphasigen Betrieb im Laststromkreis dreimal so groß ist wie im einphasigen Betrieb und daher auch dreimal größer bemessen sein muß als dies vom Energieaufwand her erforderlich wäre. Die Netzgeräte von Kleinverbrauchern wurden bislang mit mindestens drei Einzeltransformatoren ausgestattet, die das Gesamtgewicht und Gesamtvolumen erheblich belasten. Es gibt auch Netzgeräte dieser Art mit getasteten elektronischen Komponenten, die kostenintensiv sind und zumeist zusätzliche Abschirmungen benötigen.

Aus der DE-OS 27 08 882 ist ein schaltendes Netzteil für die Stromversorgung elektronischer Zähler bekannt. Um hier gleichzeitig das Eindringen von Überspannungen und Störungen in die Stromversorgung zu verhindern, werden Vorwiderstände sowie hinter dem Vorwiderstand bzw. den Vorwiderständen beidseitig spannungsbegrenzende Schaltmittel und Kondensatoren vorgesehen. Hierauf erfolgt eine bzw. mehrere Gleichrichterdioden und ein Ladekondensator. Am Ladekondensator tritt nur eine Spannung auf, deren Höhe von der Wahl der spannungsbegrenzenden Schaltmittel abhängt. Überspannungen und Störspitzen werden durch die Vorwiderstände und die Schaltmittel bzw. die Kondensatoren in Wärme umgesetzt und wirken sich praktisch nicht auf die Gleichspannung an den Ladekondensatoren aus. In diesem Dokument ist außerdem eine vorteilhafte Ausführung einer Stromversorgung offenbart, die sich besonders für Geräte mit kleinem Stromverbrauch eignet. Die Netzspannung bzw. die Spannungen der Dreiphasen wird bzw. werden über Vorwiderstände und Kondensatoren, Gleichrichtern für die positive Halbwelle sowie Gleichrichtern für die negative Halbwelle zugeführt. An einer Zehnerdiode und einem Ladekondensator entsteht eine begrenzte positive Spannung, die von einem Spannungsregler in eine erste Speisespannung für die Versorgung des Geräts umgeformt wird. Die in diesem Dokument vorgeschlagenen Schaltungen sind jedoch nicht für die Stromversorgung bei beliebigen Spannungsausfällen in einer oder zwei Phasen ausgelegt.

Die Erfindung hat sich daher die Aufgabe gestellt, für Kleinverbraucher, beispielsweise für Netzgeräte zur Erzeugung der Betriebsspannung für statische Elektrizitätszähler, eine dreiphasige Anspeisung zu schaffen, die bei geringem Aufwand an Gewicht, Volumen und Kosten bei beliebigen Spannungsausfällen in einer oder zwei Phasen den erforderlichen Strom für den angeschlossenen Kleinverbraucher liefert und die auch eine gute Transportfähigkeit aufweist.

Die Erfindung erzielt dies dadurch, daß alle Phasenstromkreise bis auf einen vorgegebenen letzten miteinander verbunden sind und an der Verbindungsstelle über eine gemeinsame Diode an den letzten Phasenstromkreis angeschlossen sind.

Die bekannte Tatsache, daß bei gleichen Vorschaltimpedanzen alle Phasenströme eines symmetrischen Dreiphasennetzes die Stromsumme Null ergeben, kann auch so ausgedrückt werden, daß die Ströme zweier Phasen einen Summenstrom ergeben, der gleich groß ist wie der Strom der dritten Phase, jedoch - in Bezug auf eine gedachte gemeinsame Verbindungsstelle - diesem entgegengesetzt gerichtet ist. Daher kann die Erfindung auch in Zweiphasennetzen mit 180° Phasendrehung zwischen den Außenleitern ebenfalls angewandt werden. Der Kondensator einer dritten Phase entfällt in diesem Fall. Das gleiche gilt auch für die Phasenspannungen im Dreiphasensystem, die, bedingt durch die verwendeten Kondensatoren, gegenüber den Phasenströmen zeitliche Phasenverschiebungen aufweisen. Wenn nun, wie dies bei der Erfindung der Fall ist, zwei Phasenstromkreise miteinander verbunden sind und gemeinsam über eine Diode an den dritten Phasenstromkreis angeschlossen sind, dann entstehen an den beiden Enden der Diode stets zwei einander entgegengesetzte Ladungsangebote bzw. -defizite. Somit ergibt sich während jener Halbwellen, in denen an der Diode eine Durchlaßspannung liegt, ein Stromabfluß von dem genannten dritten Phasenstromkreis zu den miteinander verbundenen beiden anderen Phasenstromkreisen. Dieser Stromabfluß schwächt den dritten Phasenstrom in einem solchen Ausmaß, daß der resultierende Ausgangsstrom des Netzwerkes bei ungestörtem, d.h. dreiphasigem Betrieb etwa gleich groß ist wie der Ausgangsstrom bei gestörtem Betrieb, also wenn jeweils nur zwei Phasen oder gar nur eine aktiv sind. Demnach erhält der an das erfindungsgemäße Netzwerk angeschlossene Kleinverbraucher einen von der Anzahl der jeweils aktiven Phasen nahezu unabhängigen Speisestrom mit dem geringsten Einsatz an Schaltungselementen, nämlich mit Hilfe einer einzigen Diode.

Ein weiterer Vorteil dieser Anordnung ist, daß im Dreiphasenbetrieb kein Ausgleichsstrom über den Nulleiter erforderlich ist, also auch bei Unterbrechung im Nulleiterzweig bzw. im Dreileiter-Drehstromnetz angewandt werden kann.

Die bekannte Tatsache, daß bei gleichen Vorschaltimpedanzen alle Phasenströme eines symmetrischen Dreiphasennetzes die Stromsumme Null ergeben, kann auch so ausgedrückt werden, daß die Ströme zweier Phasen einen Summenstrom ergeben, der gleich groß ist wie der Strom der dritten Phase, jedoch - in Bezug auf eine gedachte gemeinsame Verbindungsstelle- diesem entgegengesetzt gerichtet ist. Daher kann die Erfindung auch in Zweiphasennetzen mit 180° Phasendrehung zwischen den Außenleitern ebenfalls angewandt werden. Der Kondensator einer dritten Phase entfällt in diesem Fall. Das gleiche gilt auch für die Phasenspannungen im Dreiphasensystem, die, bedingt durch die verwendeten Kondensatoren, gegenüber den Phasenströmen zeitliche Phasenverschiebungen aufweisen. Wenn nun, wie dies bei der Erfindung der Fall ist, zwei Phasenstromkreise miteinander verbunden sind und gemeinsam über eine Diode an den dritten Phasenstromkreis angeschlossen sind, dann entstehen an den beiden Enden der Diode stets zwei einander entgegengesetzte Ladungsangebote bzw. -defizite. Somit ergibt sich während jener Halbwellen, in denen an der Diode eine Durchlaßspannung liegt, ein Stromabfluß von dem genannten dritten Phasenstromkreis zu den miteinander verbundenen beiden anderen Phasenstromkreisen. Dieser Stromabfluß schwächt den dritten Phasenstrom in einem solchen Ausmaß, daß der resultierende Ausgangsstrom des Netzwerkes bei ungestörtem, d.h. dreiphasigem Betrieb etwa gleich groß ist wie der Ausgangsstrom bei gestörtem Betrieb, also wenn jeweils nur zwei Phasen oder gar nur eine aktiv sind. Demnach erhält der an das erfindungsgemäße Netzwerk angeschlossene Kleinverbraucher einen von der Anzahl der jeweils aktiven Phasen nahezu unabhängigen Speisestrom mit dem geringsten Einsatz an Schaltungselementen, nämlich mit Hilfe einer einzigen Diode.

Ein weiterer Vorteil dieser Anordnung ist, daß im Dreiphasenbetrieb kein Ausgleichsstrom über den Nulleiter erforderlich ist, also auch bei Unterbrechung im Nulleiterzweig bzw. im Dreileiter-Drehstromnetz angewandt werden kann.

Eine erhöhte Stromausbeute läßt sich erzielen, wenn in den gemeinsamen Teil der miteinander verbundenen Phasenstromkreise zwischen zwei Dioden ein Kondensator eingeschaltet ist, der von der bislang ungenutzen Halbwelle aufgeladen wird und den ein während der Entladephase geschlossener elektronischer Schalter über eine weitere, an den Speisepunkt angeschlossene Diode entlädt. Als elektronischer Schalter eignet sich insbesondere ein Schalttransistor der über ein passives, zwischen dem Speisepunkt und der Verbindungsstelle zwischen den miteinander verbundenen Phasenstromkreisen eingeschaltetes Netzwerk angesteuert wird.

Eine durch Spannungswandlung erhöhte Stromausbeute läßt sich dadurch erzielen, daß an den Gleichstrom-Speisepunkt eine aus mehreren, mit Dioden zusammengeschalteten Kondensatoren bestehende Spannungswandlerschaltung angeschlossen ist, deren Kondensatoren bei Halbwellen einer Polarität zusammen mit zwischengeschalteten Dioden zueinander in Serie liegend einen gemeinsamen Ladestromkreis bilden und bei Halbwellen der entgegengesetzten Polarität zusammen mit in Querstrompfaden liegenden Dioden zueinander parallel geschaltete Entladestromkreise bilden, die sich über einen elektronischen Schalter in den Ausgangskreis entladen.

Nach weiteren Merkmalen der Erfindung lassen sich aus dem gemeinsamen Teil der miteinander verbundenen Phasenstromkreise durch eine Triggerschaltung eine netzfrequente Taktspannung oder mittels eines gesteuerten Vestärkers eine netzfrequente Wechselspannung ableiten.

Weitere Schaltspannungen lassen sich durch in Zuleitungen zu den diversen Phasenstromkreisen eingeschaltete Sensoren, vorzugsweise Optokoppler gewinnen.

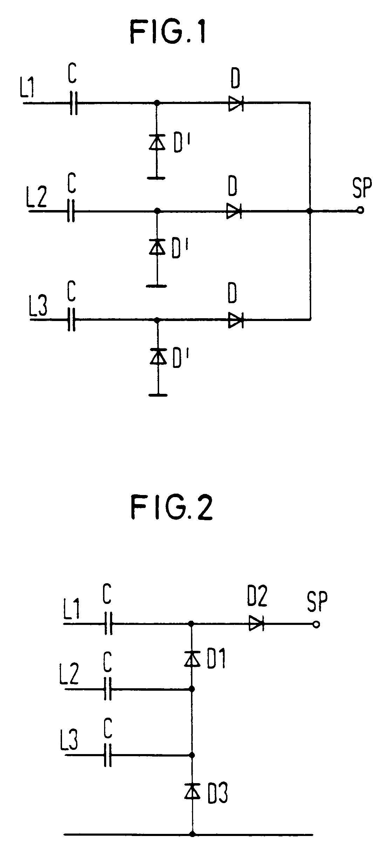

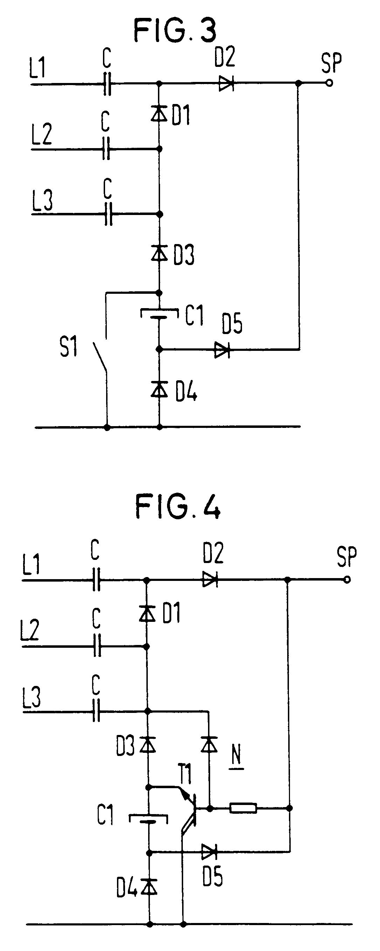

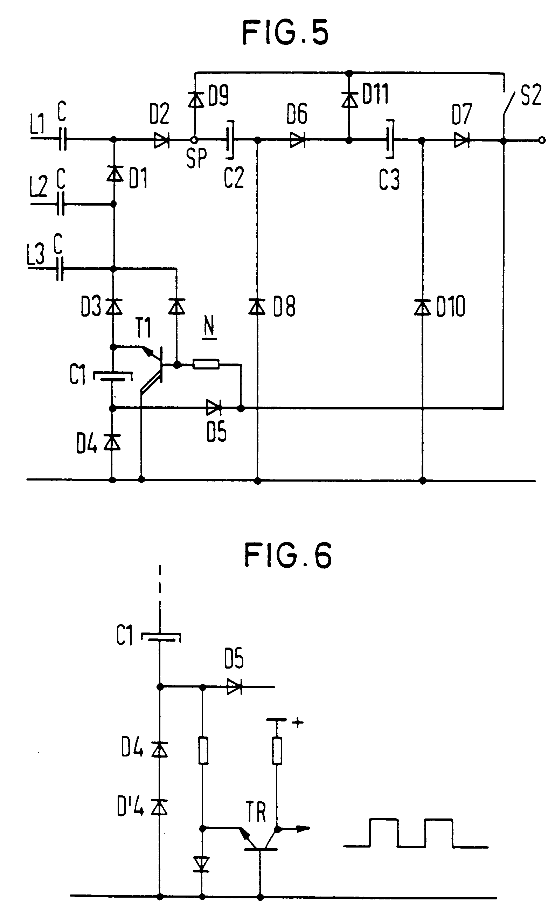

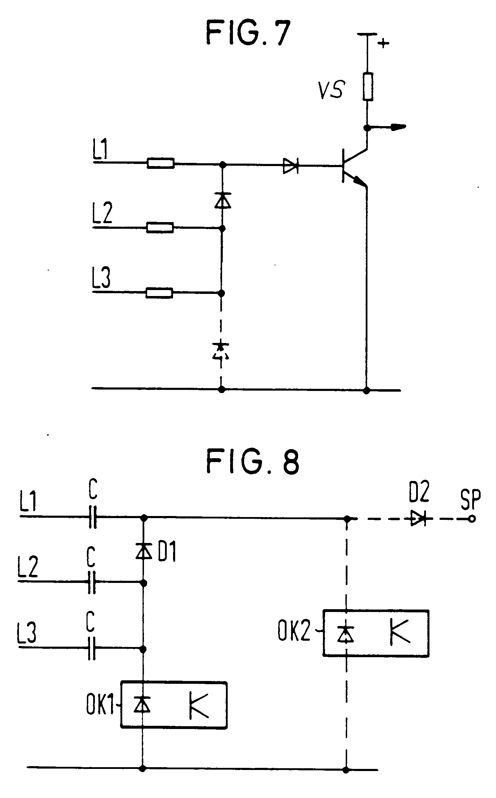

Fig. 1 zeigt den Aufbau einer bekannten Schaltung, die in ihrer Struktur der Erfindung nahekommt. Der grundsätzliche Aufbau der erfindungsgemäßen Schaltung ist in Fig. 2 dargestellt. Eine erhöhte Stromausbeute läßt sich durch eine Schaltung erzielen, die anhand der Fig. 3 im Prinzip erläutert wird und gemäß Fig. 4 ausgeführt ist. Eine besonders ergiebige Schaltung zeigt Fig. 5. Der Erzeugung eines für manche Kleinverbraucher erforderlichen Netztaktes dient die Schaltung nach Fig. 6. Der Schaltung nach Fig. 7 kann eine Wechselspannung mit der Netzfrequenz entnommen werden, sobald wenigstens eine Phase Spannung führt. Netzfrequente optische Signale können mit Hilfe der Schaltung nach Fig. 8 gewonnen werden.

Die in Fig. 1 dargestellte bekannte Schaltung zur Gewinnung einer Gleichspannung aus einem Dreiphasennetz weist in drei Phasenstromkreisen L1,L2,L3 je einen Kondensator und je eine Diode auf, die einheitlich mit C bzw. D bezeichnet sind. Diese drei Phasenstromkreise L1,L2,L3 sind gleichstromseitig an einen gemeinsamen Gleichstrom-Speisepunkt SP angeschlossen. Weiters sind die drei Phasenstromkreise L1,L2,L3 einzeln über je eine Rückstromdiode D′ mit dem Nulleiterpotential verbunden. Bei dieser Schaltung besteht also der Nachteil, daß der bei normalem dreiphasigem Betrieb zur Verfügung gestellte Strom dreimal so groß ist wie der beim einphasigen Betrieb auftretende Strom.

Diesen Nachteil vermeidet die erfindungsgemäße Schaltung, die in Fig. 2 im Prinzip dargestellt ist. Bei dieser Schaltung sind die Phasenstromkreise L2 und L3 auf der von der Netzspeisung abgewandten Seite der Kondensatoren C miteinander verbunden und die Verbindungsstelle ist über eine gemeinsame Diode D1 mit dem dritten Phasenstromkreis L1 verbunden, der seinerseits über eine weitere Diode D2 an den Gleichstrom-Speisepunkt SP angeschlossen ist. Den Rückstrom vom Nulleiter für alle drei Phasenstromkreise führt eine gemeinsame Rückstromdiode D3. Bei dieser Schaltung tritt auf der einen Seite der Diode D1 der Summenstrom der Phasen L2 und L3 auf, während auf der anderen Seite der Strom der Phase L1 allein fließt. Die Schaltung nach Fig. 2 liefert nur in einer Netzhalbwelle Laststrom.

Die Schaltung nach Fig. 3 ermöglicht eine höhere Stromausbeute dadurch, daß in den gemeinsamen Teil der miteinander verbundenen Phasenstromkreise zwischen zwei Dioden D3 und D4 ein Kondensator C1 eingeschaltet ist, der sich während negativer Halbwellen im Knoten D1,D3,C,C über diese beiden Dioden auflädt. Ein gesteuerter elektronischer Schalter S1 schließt während der positiven Halbwellen einen Entladestromkreis für den Kondensator C1, der über eine weitere Diode D5 zum Gleichstrom-Speisepunkt SP führt.

Positive Halbwellen im Phasenstromkreis L1 fließen über die Diode D2 und den Speisepunkt SP in den Gleichstromkreis und von dort über die Diode D4, den Kondensator C1 sowie über die Diode D3 zurück zum Verbindungspunkt der Phasenstromkreise L2 und L3, wo sie sich auf diese beiden Phasen aufteilen. Während jeder dieser positiven Halbwellen wird der Kondensator C1 aufgeladen. Während der Dauer der folgenden negativen Halbwelle wird der Schalter S1 geschlossen, wonach sich der Kondensator C1 über die Diode D5 und den Speisepunkt SP in den Gleichstromkreis entlädt, wobei der Rückstrom aus dem Gleichstromkreis über den geschlossenen Schalter S1 zum Kondensator C1 zurückfließt. Ehe die nächste positive Halbwelle wieder beginnt, wird der Schalter S1 wieder geöffnet.

Fig. 4 zeigt die konkrete Ausführung der Schaltung nach Fig. 3, bei der nämlich der in Fig. 3 mit S1 bezeichnete elektronische Schalter durch einen Transistor T1 repräsentiert ist, welcher über ein Netzwerk N angesteuert ist, das zwischen den Speisepunkt SP und die Verbindungsstelle zwischen den Phasenstromkreisen L2 und L3 geschaltet ist. Im speziellen besteht dieses Netzwerk aus einem Widerstand und einer Diode in Serienschaltung, deren Verbindungspunkt an die Basis des Transistors T1 angeschlossen ist.

Fig. 5 zeigt die erfindungsgemäße Schaltung im Zusammenwirken mit einer Spannungswandlerschaltung, die im Endeffekt eine erhöhte Stromausbeute liefert. Diese Spannungswandlerschaltung besteht aus zwei (gegebenenfalls auch mehreren), mit Dioden D6 bis D11 zusammengeschalteten Kondensatoren C2, C3 die bei Halbwellen einer Polarität zusammen mit zwei zwischengeschalteten Dioden D6 und D7 zueinander in Serie liegend einen gemeinsamen Ladestromkreis bilden un die bei Halbwellen der entgegengesetzten Polarität zusammen mit in Querstromkreisen liegenden Dioden D8 und D9 bzw. D10 und D11 zueinander parallel geschaltete Entladestromkreise bilden, die sich bei Halbwellen der entgegengesetzten Polarität über einen gesteuerten elektronischen Schalter S2 in den Ausgangskreis entladen. Die Spannungswandlerschaltung kann auch im Kreis D3,C1,D4 gegen N angeordnet sein.

Fig. 6 zeigt, wie man durch eine parallel zu in den gemeinsamen Speisestromkreis der miteinander verbundenen Phasenstromkreise L2,L3 eingeschalteten Dioden D4, D′4 liegende Triggerschaltung TR eine netzfrequente Taktspannung ableiten kann.

Auch eine netzfrequente Wechselspannung läßt sich, wei in Fig. 7 dargestellt, vom erfindungsgemäßen Netzwerk ableiten und zwar mit Hilfe eines an einen Gleichstrom-Speisepunkt angeschlossenen Verstärkers.

Gemäß Fig. 8 lassen sich netzfrequente Schaltspannungen mit Hilfe von Optokopplern OK1, OK2 gewinnen, die entweder in den gemeinsamen Teil der miteinander verbundenen Phasenstromkreise L2,L3 oder in eine Zuleitung zum dritten Phasenstromkreis L1 eingeschaltet sind.

## Patentansprüche

1. Mehrphasig gespeistes Netzgerät für Kleinverbraucher, bei dem über Vorschaltimpedanzen, insbesondere Kondensatoren, geführte Phasenstromkreise mittels Dioden an einen gemeinsamen Gleichstrom-Speisepunkt (SP) sowie einen Nullleiter angeschlossen sind,
**dadurch gekennzeichnet**,
daß alle Phasenstromkreise (L2,L3) auf der von der Netzeinspeisung abgewandten Seite der Vorschaltimpedanzen bis auf einen vorgegebenen letzten Phasenstromkreis (L1) miteinander verbunden sind, daß diese Verbindungsstelle über eine Diode (D1) mit dem letzten Phasenstromkreis (L1) verbunden ist (Fig. 2), der seinerseits über eine zweite Diode (D2) an den Gleichstrom-Speisepunkt (SP) angeschlossen ist und daß an den Nulleiter eine dritte Diode (D3) zur Führung des Rückstromes für alle Phasenleiter (L1,L2, L3) angeschlossen ist, wobei der Gleichstrom-Speisepunkt (SP) und der Nulleiter zum Anschluß des Verbrauchers vorgesehen sind. (FIG 2)

2. Netzwerk nach Anspruch 1,
**dadurch gekennzeichnet**,
daß in die Verbindung zwischen der dritten Diode (D3) und dem Nulleiter ein Condensator (C1) und eine vierte Diode (D4) in Reihe geschaltet sind, und daß der Kondensator (C1) durch einen während einer Entladephase geschlossenen elektronischen Schalter (S1) über eine an den Gleichstrom-Speisepunkt (SP) angeschlossene fünfte Diode (D5) entladbar ist. (FIG 3)

3. Netzwerk nach Anspruch 2,
**dadurch gekennzeichnet**,
daß der elektronische Schalter (S1) mittels eines Schalttransistors (T1) realisiert ist, der über ein passives, zwischen dem Gleichstrom-Speisepunkt (SP) und der Verbindungsstelle zwischen den miteinander verbundenen Phasenstromkreisen (L2,L3) eingeschaltetes Netzwerk (N) angesteuert ist. (FIG 4)

4. Netzwerk nach einem der vorhergehenden Ansprüche, **dadurch gekennzeichnet**, daß an den Gleichstrom-Speisepunkt (SP) eine aus mehreren, mit Dioden (D6 bis D11) zusammengeschalteten Kondensatoren (C2,C3) bestehende Spannungswandlerschaltung angeschlossen ist, deren Kondensatoren (C2,C3) bei Halbwellen einer Polarität zusammen mit zwischengeschalteten Dioden (D6,D7) zueinander in Serie liegend einen gemeinsamen Ladestromkreis bilden und bei Halbwellen der entgegengesetzten Polarität zusammen mit in Querstrompfaden liegenden Dioden (D8,D9,D10,D11) zueinander parallel geschaltete Entladestromkreise bilden, die sich über einen elektronischen Schalter (S2) in den Ausgangskreis entladen. (Fig. 5)

5. Netzwerk nach einem der vorhergehenden Ansprüche, **dadurch gekennzeichnet**, daß parallel zu in den gemeinsamen Speisestromkreis der miteinander verbundenen Phasen (L2,L3) eingeschalteten Dioden (D4,D′4) eine Triggerschaltung (TR) liegt, von der eine netzfrequente Taktspannung ableitbar ist. (Fig. 6)

6. Netzwerk nach einem der vorhergehenden Ansprüche, **dadurch gekennzeichnet**, daß an einen Gleichstromspeisepunkt ein von dessen Ausgangsspannung gesteuerter Verstärker (VS) zur Gewinnung einer netzfrequenten Wechselspannung angeschlossen ist. (Fig. 7)

7. Netzwerk nach einem der vorhergehenden Ansprüche, **dadurch gekennzeichnet**, daß in den gemeinsamen Teil der miteinander verbundenen Phasenstromkreise (L2,L3) und allenfalls in eine Zuleitung zum dritten Phasenstromkreis (L1) dem Gewinn von Schaltspannungen dienende Optokoppler (OK1, OK2) eingeschaltet sind. (Fig. 8)

## Claims

1. A power supply unit with multi-phase supply for small consumers, wherein phase circuits conducted across series impedances, in particular capacitors, are connected by means of diodes to a common d.c. feed point (SP) and a neutral conductor, characterised in that all the phase circuits (L2, L3) on the side of the series impedances facing away from the mains in-feed, except for a predetermined last phase circuit (L1), are connected to one another, that this connection point is connected via a diode (D1) to the last phase circuit (L1) (Fig. 2), which is itself connected via a second diode (D2) to the d.c. feed point (SP), and that a third diode (D3) for conducting the reverse current for all the phase conductors (L1, L2, L3) is connected to the neutral conductor, where the d.c. feed point (SP) and the neutral conductor are provided for the connection of the consumer (Fig. 2).

2. A network as claimed in Claim 1, characterised in that a capacitor (C1) and a fourth diode (D4) are connected in series into the connection between the third diode (D3) and the neutral conductor, and that the capacitor (C1) can be discharged by an electronic switch (S1), closed during a discharging phase, via a fifth diode (D5) connected to the d.c. feed point (SP) (Fig. 3).

3. A network as claimed in Claim 2, characterised in that the electronic switch (S1) is formed by means of a switching transistor (T1) which is driven via a passive network (N) connected between the d.c. feed point (SP) and the connection point of the interconnected phase circuits (L2, L3) (Fig. 4).

4. A network as claimed in one of the preceding claims, characterised in that to the d.c. feed point (SP) there is connected a voltage transformer circuit which consists of a plurality of capacitors (C2, C3) interconnected to diodes (D6, D11) and in which, in the case of half waves of one polarity, the capacitors (C2, C3), arranged in series together with interconnected diodes (D6, D7), form a common charging circuit and in the case of half waves of the opposite polarity, together with diodes (D8, D9, D10, D11) arranged in cross-current paths, form discharging circuits which are connected in parallel to one another and which discharge via an electronic switch (S2) into the output circuit (Fig. 5).

5. A network as claimed in one of the preceding claims, characterised in that a trigger circuit (TR), from which a mains-frequency clock voltage can be derived, is arranged in parallel to the diodes (D4, D′4) connected into the common feed circuit of the interconnected phases (L2, L3). (Fig. 6).

6. A network as claimed in one of the preceding claims, characterised in that to a d.c. feed point there is connected an amplifier (VS), controlled by the output voltage of the latter, for the acquisition of a mains-frequency a.c. voltage (Fig. 7).

7. A network as claimed in one of the preceding claims, characterised in that opto-couplers (OK1, OK2) for the acquisition of switching voltages are connected into the common part of the interconnected phase circuits (L2, L3) and possibly into a supply line to the third phase circuit (L1) (Fig. 8).

## Revendications

1. Bloc d'alimentation secteur à alimentation polyphasée pour des récepteurs consommant peu, dans lequel des circuits de courant de phases, qui sont amenés par l'intermédiaire d'impédances additionnelles, notamment des condensateurs, sont connectés au moyen de diodes à un point (SP) commun d'alimentation en courant continu ainsi qu'à un conducteur neutre,
caractérisé en ce que,
à l'exception d'un dernier circuit (L1) prescrit de courant de phase, tous les circuits (L2, L3) de courant de phase, qui se trouvent du côté des impédances additionnelles éloigné de l'alimentation du secteur, sont reliés l'un à l'autre, cet emplacement de liaison est relié (figure 2) par l'intermédiaire d'une diode (D1) au dernier circuit (L1) de courant de phase, qui pour sa part est connecté par l'intermédiaire d'une deuxième diode (D2) au point (SP) d'alimentation en courant continu et une troisième diode (D3) destinée à conduire le courant de retour pour tous les conducteurs (L1, L2, L3) de phase est connectée au conducteur neutre, le point (SP) d'alimentation en courant continu et le conducteur neutre étant prévus pour la connexion du récepteur (figure 2).

2. Bloc d'alimentation secteur suivant la revendication 1,
caractérisé en ce que
un condensateur (C1) et une quatrième diode (D4) sont branchés en série dans la liaison entre la troisième diode (D3) et le conducteur neutre et le condensateur (Cl) peut être déchargé par un interrupteur (S1) électronique fermé pendant une phase de décharge, par l'intermédiaire d'une cinquième diode (D5) connectée au point (SP) d'alimentation en courant continu (figure 3).

3. Bloc d'alimentation secteur suivant la revendication 2,
caractérisé en ce que
l'interrupteur (S1) électronique est réalisé au moyen d'un transistor (T1) interrupteur, qui est connecté par l'intermédiaire d'un réseau (N) passif, inséré entre le point (SP) d'alimentation en courant continu et l'emplacement de liaison entre les circuits (L2, L3) de courant de phase reliés l'un à l'autre (figure 4).

4. Bloc d'alimentation secteur suivant l'une des revendications précédentes, caractérisé en ce qu'un circuit convertisseur de tension, qui est constitué de plusieurs condensateurs (C2, C3) branchés à des diodes (D6 à D11) et dont les condensateurs (C2, C3) forment, pour les alternances d'une polarité, conjointement avec des diodes (D6, D7) intercalées et se trouvant en série les unes par rapport aux autres, un circuit de courant de charge commun et pour les alternances de polarité opposée, conjointement avec des diodes (D8, D9, D10, D11) se trouvant dans des trajets de courant transversaux, des circuits de courant de décharge branchés en parallèle les uns aux autres et se déchargeant par l'intermédiaire d'un interrupteur (S2) électronique dans le circuit de sortie, est connecté au point (SP) d'alimentation en courant continu (figure 5).

5. Bloc d'alimentation secteur suivant l'une des revendications précédentes, caractérisé en ce qu'un circuit (TR) déclencheur, duquel peut être prélevé une tension de cadence à la fréquence du secteur, est disposé en parallèle à des diodes (D4, D′4) intercalées dans le circuit commun de courant d'alimentation des phases (L2, L3) reliées l'une à l'autre (figure 6).

6. Bloc d'alimentation secteur suivant l'une des revendications précédentes, caractérisé en ce qu'un amplificateur (VS), qui est commandé par la tension de sortie d'un point d'alimentation en courant continu et qui est destiné à l'obtention d'une tension alternative à la fréquence du secteur, est connecté à ce point d'alimentation en courant continu (figure 7).

7. Bloc d'alimentation secteur suivant l'une des revendications précédentes, caractérisé en ce que des coupleurs optoélectroniques (OK1, OK2) servant à l'obtention de tensions de commutation sont intercalés dans la partie commune des circuits (L2, L3) de courant de phase reliés l'un à l'autre et au besoin dans un conducteur menant au troisième circuit (L1) de courant de phase (figure 8).
